# EUROPEAN PATENT SPECIFICATION

(11) **EP 0 783 149 B1**
(45) Date of publication and mention of the grant of the patent: **20.02.2002**
(21) Application number: 96307458.8
(22) Date of filing: 14.10.1996
(51) Int. Cl.: G06F 3/033

(54) **Clipboard for interactive desktop system**
Zwischenablage für interaktives Büro
Presse-papier pour système de bureau interactif

(30) Priority: 14.10.1995 GB 9521071
(43) Date of publication of application: 09.07.1997
(73) Proprietor: Xerox Corporation, Rochester, New York 14644 (US)
(72) Inventor: Newman, William, Cambridge Cambs (GB)
(74) Representative: Grünecker, Kinkeldey, Stockmair & Schwanhäusser Anwaltssozietät

(56) References cited:
- EP-A- 0 626 636
- NEWMAN W ET AL: "A DESK SUPPORTING COMPUTER-BASED INTERACTION WITH PAPER DOCUMENTS" 3 May 1992 , STRIKING A BALANCE, MONTEREY, MAY 3 - 7, 1992, NR. -, PAGE(S) 587 - 592 , BAUERSFELD P;BENNETT J; LYNCH G XP000426839 * the whole document *

## Description

This invention relates to a document processing system in which a user manipulates documents interactively via a camera-projector arrangement, techniques whereby a user may copy text or images to a clipboard and paste such text or images into a document. It is known from EP-A-495 622 to use a camera-projector arrangement positioned above a desk, in order to enable a user to select functions to be performed by selecting items located within the field of view of the camera. A video camera or scanner is used to capture images of documents on a desk, and feedback information is displayed by means of a projection display. The functions include calculating and translating operations carried out on data (e.g., in a paper document) located on the desk However, this system lacks the features to develop a full range of applications: for example, the system does not facilitate a copy-to-clipboard function allowing the copying of data from paper directly into any existing application that can currently accept clipboard data.

In many applications running on a computer-based document processing system, the user need to capture only a portion of a document page, e.g. when applying machine translation to a single word or phrase, or when scanning in a photograph for a document to be printed on a multifunction machine.

Newman W. et al., "A Desk Supporting Computer-based Interaction with Paper Documents", May 3, 1992, Striking a Balance, Monterey, May 3-7, 1992, pages 587-592, XP000426839 describes a desk with a computer-controlled projector and camera above it, which enables users to interact with ordinary paper documents in ways normally possible only with electronic documents on workstation screens. Two simple applications can benefit from this style of interaction: a desk calculator and a French to English translation system. When capturing an image, coordinates are read from a hand-held stylus or other pointing device and used to select content from text found in a database and each captured gray-scale image is converted to a binary image. For matching the image of a page with a description of a high-resolution image in the database, feature extraction exploiting typographic layout conventions is used.

Two problems here are (a) to provide an easily learned user interface for selecting material from the page, and (b) to devise a simple, general software architecture for transfer of scanned material to a range of application packages.

It is, therefore, the object of the present invention to provide for an improved method and system which provides users with a very simple, convenient way of copying pages of text, or parts of pages, into the workstation clipboard. There is a need for such a device which is not bulky or cumbersome, which can be plugged into the workstation and be operated with the standard mouse.

The above object is solved by the subject-matter of the independent claims.

Preferred embodiments are the subject-matter of the dependent claims.

The present invention provides an interactive desktop system comprising a work surface, a display device for displaying images in a first area, an image capture device for capturing images in a second area on the work surface, and a processor, coupled to the display device and to the image capture device, said processor including means, responsive to user input, for causing the capture of an image selected by the user, said user-selected image representing data of a particular type, and means for determining the particular type from a plurality of predetermined types from said user-selected image.

The invention further provides a method of capturing images in an interactive desktop system including a work surface, a display device for displaying images in a first area, an image capture device for capturing images in a second area on the work surface, and a processor, coupled to the display device and to the image capture device, comprising the steps of: (a) in response to user input, causing the capture of an image selected by the user, said user-selected image representing data of a particular type, and (b) determining the particular type from a plurality of predetermined types from said user-selected image.

Step (a) may include the step of extracting, from the images captured by the image capture device, the image selected by the user.

The display device may comprise a desk-mounted VDU, such as a CRT monitor; and the system may be implemented as described in British patent application 9614694.9, filed 12th July 1996. Alternatively, the display device may comprise a video projector forming images on the work surface, such as descibed in EP-A-622,722, or as described in British patent application 9614837.4, filed 12th July 1996.

Preferably, the image capture device comprises a video camera.

The second area may overlap with, or be located entirely within, the first area.

The invention comprehends the use of the clipboard, i.e. the cut-and-paste buffer, which provides general support for the transfer of data between personal computer applications, or within one application in normal use, the clipboard permits data to be copied from anywhere in one application and pasted into another. With the present invention, the usefulness of the clipboard is considerably extended by allowing the user to copy from paper lying on the desk.

Generally, when the user selects a portion of text/images within the camera's field of view, feedback of the selected area is displayed, and the camera image is grabbed, cropped to the selected size, thresholded, OCRed if necessary, and the resulting data is transferred to the running application (e.g. a machine translation program).

An advantage of the invention is that the same or similar techniques can be used for selecting image data, text or graphics.

A further advantage is that users can select data on paper using the same point and click techniques as they do on-screen; there are little or no new steps to learn.

A yet further advantage is that is that existing applications (e.g. Lotus Notes, Visual Recall) can be used in conjunction with the invention without any modification; and new direct interaction applications can be designed to access data via the built-in clipboard software. This should provide greatly improved convenience when compared with the use of flatbed scanners and OCR packages.

Embodiments of the invention will now be described, by way of example, with reference to the accompanying drawings, in which:
Figure 1 shows a view of the overall system according to one embodiment of the invention;
Figure 2 is a schematic block diagram of the computer used in the system of Fig. 1;
Figure 3 shows a view of a desktop before a copy/paste operation;
Figure 4 shows successive views of real and projected images on the desktop during a copy operation; and
Figure 5 is a schematic flow diagram of the data processing steps employed in the implementing the copy and/or paste technique according to the invention.

### A. Basic System

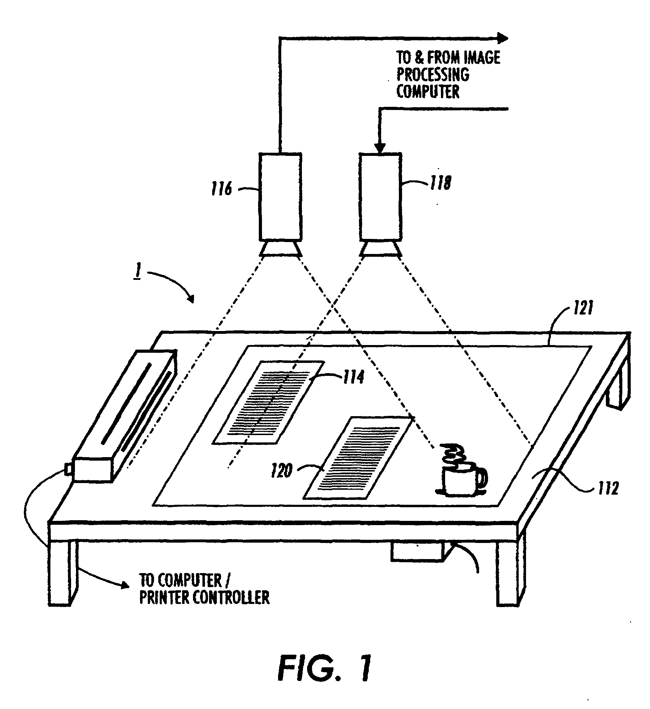

The general system configuration according to the invention, employing a video camera 116 and projector 118 positioned above and focused on a work surface 112, is illustrated in Fig. 1. The system 1 may take any of the forms described in British patent application 9614837.4, filed 12th July 1996.

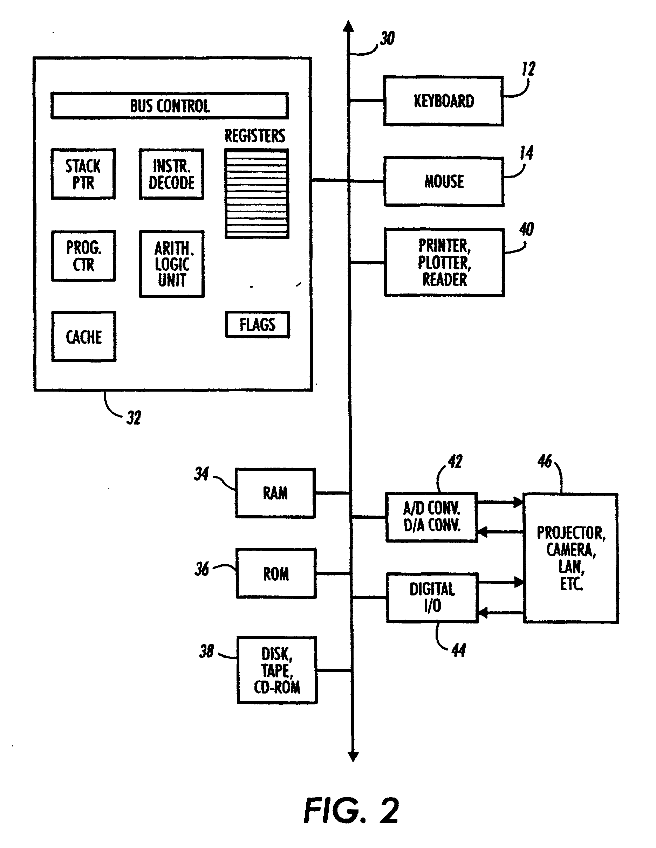

The flat desk surface 112 has placed on it a document 114 to be used as a source if textural or graphical information during manipulations, as described in EP-A-622,722. The document 114 is located within the field of view of a video camera 116 mounted above the desk surface 112. A video projector 118 is mounted adjacent the camera 116 and projects onto the surface 112 a display 121 which is generally coincident with the field of view of the camera 116, and which, in the example shown, includes an image of a newly created document 120. The camera 116 and the projector 118 are both connected to an image processing system (not shown), which may be, for example, a computer having a standard microcomputer (PC) architecture; this is described in further detail below with reference to Fig.2.

It will be appreciated by persons skilled in the art that the invention may be implemented using a computer running Windows™ and equipped with a frame grabber board and appropriate interfacing circuitry (see, for example, Jähne B., *Digital Image Processing,* Appendix B, Springer-Verlag, Heidelberg, 1991).

Alternatively, the hardware configuration described in detail in published European application EP-A-622,722 may be employed. In another alternative, the system may have the desk lamp configuration and additional features disclosed in GB application 96 148 37.4, filed 12th July 1996. In a further alternative, the system may employ the user interface features disclosed in GB application 96 146 94.9, filed 12th July 1996.

In implementing the present invention, image processing techniques described in EP-A-622,722 may be used, modified as appropriate and/or as described below.

The computer is coupled to a network cable 16, which in conjunction with a conventional internal driver card (not shown) and appropriate software (such as Netware, available from Novell Corp.) enable the computer to form part of a local (LAN) or wide area network (WAN), as is well known in the art.

The hardware of the image processing computer employed in one preferred embodiment of the invention is schematically shown in Fig. 2. The configuration is well known to persons skilled in the art and, for example, is described in detail in *The Art of Electronics*, 2nd Edn, Ch. 10, P. Horowitz and W. Hill, Cambridge University Press, 1989. Stated briefly, the system comprises, connected to common bus 30, a central processing unit 32, memory devices including random access memory (RAM) 34, read only memory (ROM) 36 and disk, tape or CD-ROM drives 38, keyboard 12, mouse 14, printing, plotting or scanning devices 40, and A/D, D/A devices 42 and digital input/output devices 44 providing interfacing to external devices 46 such as camera 116, video projector 118 and the rest of the LAN (not shown).

### B. Copy/paste Procedure

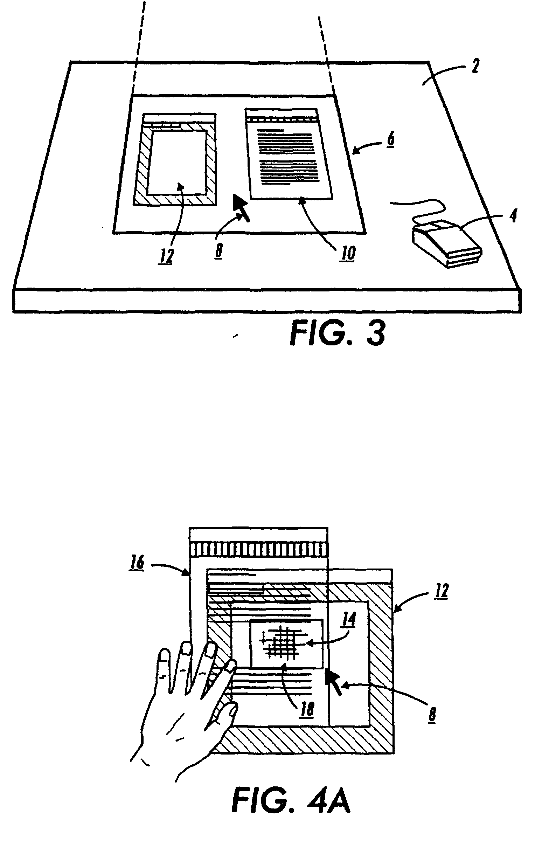

Figure 3 shows a view of a desktop before a copy/paste operation. on the desktop 2 the user has a conventional mouse 4 connected to his workstation and operable to select text and images, and to pull down menus and select functions/operations in the conventional manner employed with graphical user interfaces. The cursor position, controlled by mouse 4, is part of the projected display 6, and is indicated by reference numeral 8. Also included in the display 6 is for example a running word processor application 10, and a blank (white) window 12 indicating the field of view of the camera.

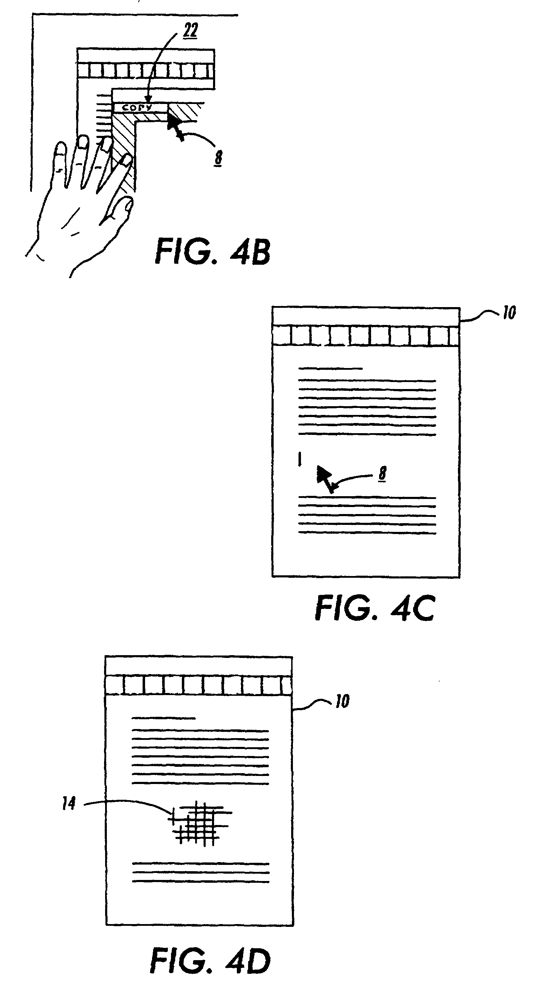

Figure 4 shows successive views of real and projected images on the desktop during a copy operation, in which a user copies a diagram 14 from a paper document 16 to the system clipboard, and then pastes it into the running word processor application 10. The user selects (Fig. 4(a)) the diagram 14 by placing the document in a position such that the diagram is within the window 12, moving the cursor 8 to the top left hand corner of the diagram, pressing the left mouse button, drawing a diagonal line with the cursor to the bottom left corner of the diagram 8 (while keeping the left mouse button pressed), and then releasing the button when the diagram appears to have been properly selected. The user is shown what is currently selected, while drawing the diagonal, by a projected rectangle having at opposite comers the start point 20 of the cursor 8 and the current position of the cursor 8.

After this selection has been made, the user uses the mouse 4 and cursor 8 to select the "copy" function 22 (Fig. 4(b)) in the menu of the running application, in the conventional manner, whereupon the selected matter is copied to the system's clipboard and therefore stored in memory. The user then moves the cursor 8 to the desired position in the displayed word processor document 10 (Fig. 4(c)), and then selects "paste", whereupon the diagram 14 is pasted into the document 10 at the indicated location (Fig. 4(d)).

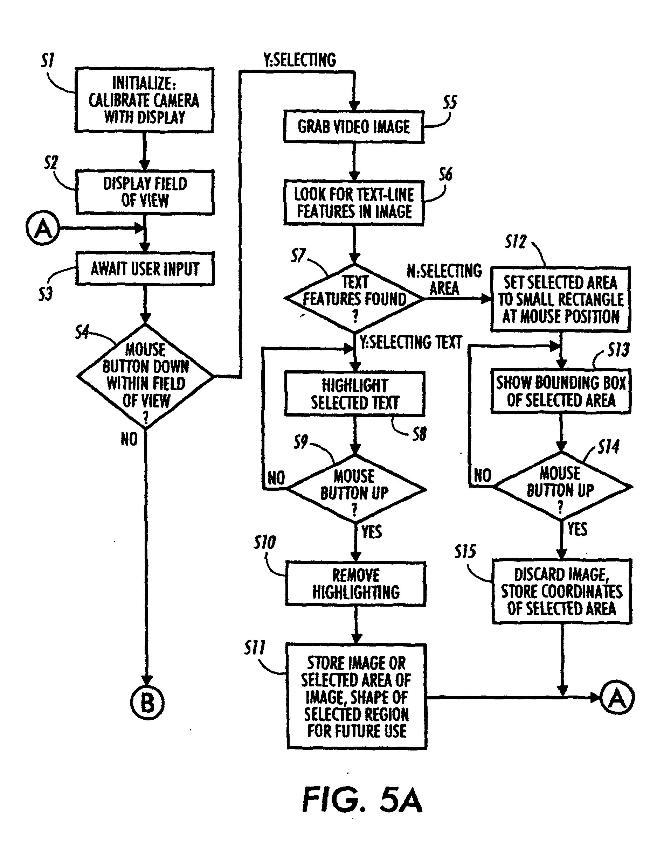

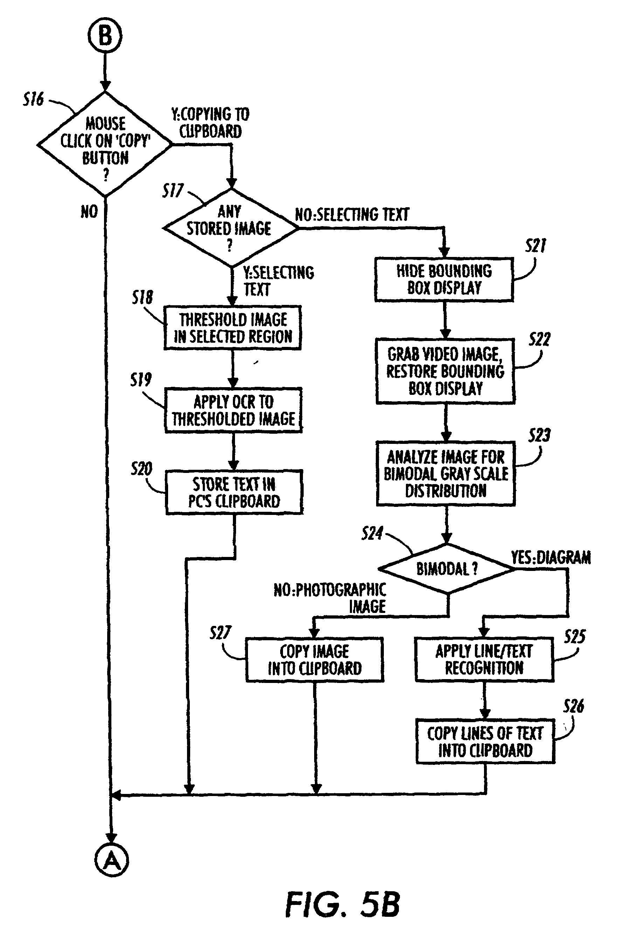

Figure 5 is a schematic flow diagram of the data processing steps employed in the implementing the copy and/or paste technique according to the invention.

According to the invention, the method of selection relies on segmenting software to distinguish between the various types of data (image, text, graphics) in the scanned document. When the user selects a portion of the paper document with the mouse (whose position is shown in the document using the projection display) an image of the document is grabbed, and a segmenter tool determines the type of (image) data within the region selected. The item selected then depends on the type of data and the user's actions.

If the user wishes to select part of an image, he will indicate a rectangular region by drawing diagonally across it. The selected region is copied into the clipboard as a thresholded binary image.

If the user is selecting text, this may be done exactly as in a word processor, which techniques are known in the art: e.g. the user double-clicks on a word to select that word, or scrolls along the text to select multiple words. If the user clicks in the margin of the text, he selects the nearest line of text or, with a double-click, the paragraph. When the selected item is copied into the clipboard, it is OCRed so that the clipboard stores the coded text.

If the user selects objects in a graphics frame, these are recognised as lines, text, etc. Text objects are dealt with as in the previous case. If graphic objects are selected, their geometry is reconstructed and stored in the clipboard.

Referring to Fig. 5 (a), the initialisation step (S1) includes calibrating the camera with the display, and for this the system may employ the technique of calibrating the camera to the display as described in British patent application 95 210 72.0. At step S2 the field of view (white window) is displayed, and then the system waits for a user input (s3). A check (step s4) is made to find if the mouse button has been pressed within the field of view, and if it has, the selection process begins.

At step s5 the video image is grabbed, and the grabbed image is then analysed (step s6) for text-line features, to see whether text or non-text has been selected. If the check (step S7) finds that text has been selected, the selected text is highlighted (step S8), and this continues until the system detects (step s9) that the user has let the mouse button up. Next, the highlighting is removed (step s10) from the projection display. Then, in step s11, the system stores the image or selected area of the image, shape of selected region for future use, and the processing returns to step s3.

If at step s7 it is found that the user is selecting an area rather than text, the initial selection area (displayed as projected feedback) is set at a very small but visible rectangle at the current cursor position (step s12). As the cursor is moved to select the area (diagonally), the growing or changing bounding rectangle is continuously displayed. As soon as the system detects (step S14) the mouse button has been let up, the image is discarded and the coordinated of the selected area stored (step s15). The processing then returns to step s3.

As will be seen in Fig. 5(b), if at step s4 it is found that the user input is not the mouse button pressed with the cursor in the field of view, a check is made (step s16) to see if the mouse has been clicked on the "copy" button in the application menu bar. If not, then the processing returns to step s3.

If, on the other hand, "copy" has been selected, the system checks (step s17) to see if the is any image stored, and if there is, the image in the selected region is thresholded (step 18), the thresholded image is subjected to optical character recognition (step 19), and the text produced is stored (step s20) in the PC's clipboard. The processing then returns to step s3.

If at step s17 it is not found that an image is stored, the area selection processing is executed. At step s21 the bounding box is removed or hidden, and then the image is grabbed and the bounding box restored (step s22). Next, the image is analysed (step s23) for bimodal grayscale distribution. This corresponds to a plot of grayscale value vs number of pixels in the image with the grayscale value: a plot having only two distinct peaks implies most pixels a line or text image with pixels either black or white, whereas a flatter distribution implies, e.g., a photographic image with lots of different grayscales. If, at step s24 the image is found to be bimodal, a line/text recognition process is applied at step s25, and then the system copies the lines of text into the clipboard. The processing then returns to step s3.

If the image is not found to be bimodal, it is copied (step s27) straight into the clipboard. Once the data is stored in the clipboard of the running application, such as word processor, it is available to be pasted into the document.

It will be appreciated by persons skilled in the art that numerous variants on the abovedescribed embodiment may be implemented: for example, in performing the segmentation operation of on the portion of the image selected by the user, the automatic image segmentation technique described in EP-A-521,662 or EP-A-713,329 may be employed. In addition, the system may make a guess at the image type of the user selected image portion, and invite the user (by provision of an appropriate dialog box) to confirm that the guess is correct, or may allow for the user to override a determination of image type (again, by provision of an appropriate dialog box) - i.e. allow the user to choose another listed image type, or to select a default type.

## Claims

1. An interactive desktop system (1) comprising:
a work surface (112), a display device (118) for displaying images in a first area,
an image capture device (116) for capturing images in a second area on the work surface (112), and
a processor (32), coupled to the display device (118) and to the image capture device (116),
**characterized in that**:
said processor (32) comprises:
means, responsive to user input, for causing the capture of an image selected by the user, said user-selected image representing data of a particular type, and
means for determining the particular type from a plurality of predetermined types from said user-selected image.

2. The system (1) according to claim 1 wherein said means for the causing capture of an image selected by the user is operable in a plurality of image capture modes, each mode corresponding to a respective one of said plurality of predetermined types.

3. The system (1) according to claim 1 or 2 wherein said means for causing the capture of an image selected by the user comprises:
means, responsive to a first user input, for causing the display device (118) to indicate a portion of an image within said second area as said selected image.

4. The system (1) according to one of claims 1 to 3 wherein said means for causing the capture of an image selected by the user comprises:
means, responsive to a second user input, for capturing the image within said second area, or within said indicated portion thereof as said selected image.

5. The system (1) according to one of claims 1 to 4 wherein the processor (32) comprises:
means for causing the storage of the captured selected image, and/or copying the stored selected image into a document (10) at a location designated by the user.

6. The system (1) according to claim 5 wherein the means for causing the storage of the captured selected image comprises:
means for storing said selected image in a predetermined location in a memory device (34, 38) coupled to the processing means (32).

7. The system (1) according to claim 5 or 6 wherein the means for copying includes:
means, responsive to a third user input, for causing the display device (118) to indicate said designated location designated by the user.

8. The system (1) according to claim 7 wherein the means for copying includes:
means, responsive of a fourth user input, for copying said selected image into the document (10) at said designated location.

9. The system (1) according to one of claims 1 to 8, further including:
means for causing the displaying device (118) to display said document (10) within the first area on the work surface (112), and
wherein the means for copying includes:
means for causing the display of the selected image at said designated location within the displayed document (10).

10. A method of capturing images in an interactive desktop system (1) including a work surface (112), a display device (118) for displaying images in a first area, an image capture device (116) for capturing images in a second area on the work surface (112), and a processor (32), coupled to the display device (118) and to the image capture device (116), **characterized by**:
(a) in response to user input, causing the capture of an image selected by the user, said user-selected image representing data of a particular type, and
(b) determining the particular type from a plurality of predetermined types from said user-selected image.

## Patentansprüche

1. Interaktives Arbeitsflächensystem (1) enthaltend.
eine Arbeitsoberfläche (112), eine Anzeigevorrichtung (118) zum Anzeigen von Abbildungen in einem ersten Bereich,
eine Abbildungs-Erfassungsvorrichtung (116) zum Erfassen von Abbildungen in einem zweiten Bereich auf der Arbeitsoberfläche (112), und
einen Prozessor (32), der mit der Anzeigevorrichtung (118) und der Abbildungs-Erfassungsvorrichtung (116) verbunden ist,
**dadurch gekennzeichnet, daß** der Prozessor (32) enthält:
eine Einrichtung, um in Abhängigkeit einer Anwendereingabe das Erfassen einer Abbildung, die durch den Anwender ausgewählt wurde, zu bewirken, wobei die durch den Anwender ausgewählte Abbildung Daten eines bestimmten Typs repräsentiert, und
eine Einrichtung zum Ermitteln des bestimmten Typs aus einer Vielzahl von vorbestimmten Typen aus der durch den Anwender gewählten Abbildung.

2. System (1) nach Anspruch 1, bei dem die Einrichtung zum Erfassen einer Abbildung, die durch den Anwender ausgewählt wird, in mehreren Abbildungs-Erfassungsbetriebsarten betrieben werden kann, wobei jede Betriebsart jeweils einem aus der Vielzahl von vorbestimmten Typen entspricht.

3. System (1) nach Anspruch 1 oder 2, bei dem die Einrichtung zum Erfassen einer Abbildung, die durch den Anwender ausgewählt wird, enthält:
eine Einrichtung, um in Abhängigkeit einer ersten Anwendereingabe zu bewirken, daß die Anzeigevorrichtung (118) einen Teil einer Abbildung innerhalb des zweiten Bereiches als gewählte Abbildung anzeigt.

4. System (1) nach einem der Ansprüche 1 bis 3, bei dem die Einrichtung zum Erfassen einer Abbildung, die durch den Anwender gewählt wurde, enthält:
eine Einrichtung, um in Abhängigkeit einer zweiten Anwendereingabe die Abbildung innerhalb des zweiten Bereiches oder innerhalb dessen angezeigten Bereiches als gewählte Abbildung zu erfassen.

5. System (1) nach einem der Ansprüche 1 bis 4, bei dem der Prozessor (32) enthält:
eine Einrichtung um die erfaßte gewählte Abbildung zu speichern und/oder die gewählte Abbildung in eine Vorlage (10) an einer Stelle zu kopieren, die durch den Anwender gewählt ist.

6. System (1) nach Anspruch 5, bei dem die Einrichtung zum Speichern der erfaßten gewählten Abbildung enthält:
eine Einrichtung zum Speichern der gewählten Abbildung an einem bestimmten Ort in einer Speichervorrichtung (34, 38), die mit der Prozessoreinrichtung (32) verbunden ist.

7. System (1) nach Anspruch 5 oder 6, bei dem die Einrichtung zum Kopieren enthält:
eine Einrichtung, um in Abhängigkeit einer dritten Anwendereingabe zu bewirken, daß die Anzeigevorrichtung (118) die gekennzeichnete Stelle anzeigt, die vom Anwender bestimmt wurde.

8. System (1) nach Anspruch 7, bei dem die Einrichtung zum Kopieren enthält:
eine Einrichtung, um in Abhängigkeit einer vierten Anwendereingabe die gewählte Abbildung in die Vorlage (10) an der bestimmten Stelle zu kopieren.

9. System (1) nach einem der Ansprüche 1 bis 8, weiterhin enthaltend:
eine Einrichtung, um zu bewirken, daß die Anzeigevorrichtung (118) die Vorlage (10) innerhalb des ersten Bereiches auf der Arbeitsoberfläche (112) anzeigt, und
bei dem die Einrichtung zum Kopieren enthält:
eine Einrichtung, um die gewählte Abbildung an der bestimmten Stelle innerhalb der angezeigten Vorlage (10) anzuzeigen.

10. Verfahren zum Erfassen von Abbildungen in einem interaktiven Arbeitsflächensystem (1), enthaltend: eine Arbeitsoberfläche (112), eine Anzeigevorrichtung (118) zum Anzeigen von Abbildungen in einem ersten Bereich, eine Abbildungs-Erfassungseinrichtung (116) zum Erfassen von Abbildungen in einem zweiten Bereich auf der Arbeitsoberfläche (112) und einen Prozessor, der mit der Anzeigevorrichtung (118) und mit der Abbildungs-Erfassungseinrichtung (116) verbunden ist, **gekennzeichnet durch**:
(a) in Abhängigkeit einer Anwendereingabe das Erfassen einer Abbildung, die **durch** den Anwender ausgewählt wurde, wobei die **durch** den Anwender ausgewählte Abbildung Daten eines bestimmten Typs repräsentiert, und
(b) Ermitteln des bestimmten Typs aus einer Vielzahl von vorbestimmten Typen aus der **durch** den Anwender gewählten Abbildung.

## Revendications

1. Système de bureau interactif (1) comprenant :
une surface de travail (112), un dispositif d'affichage (118) destiné à afficher des images dans une première zone,
un dispositif d'acquisition d'image (116) destiné à acquérir des images dans une seconde zone sur la surface de travail (112), et
un processeur (32), relié au dispositif d'affichage (118) et au dispositif d'acquisition d'image (116),
**caractérisé en ce que** :
ledit processeur (32) comprend :
un moyen, répondant à une saisie de l'utilisateur, destiné à provoquer l'acquisition d'une image sélectionnée par l'utilisateur, ladite image sélectionnée par ledit utilisateur représentant des données d'un type particulier, et
un moyen destiné à déterminer le type particulier d'après une pluralité de types prédéterminés, à partir de ladite image sélectionnée par l'utilisateur.

2. Système (1) selon la revendication 1, dans lequel ledit moyen destiné à provoquer l'acquisition d'une image sélectionnée par l'utilisateur peut être mis en oeuvre dans une pluralité de modes d'acquisition d'image, chaque mode correspondant à un type respectif parmi ladite pluralité de types prédéterminés.

3. Système (1) selon la revendication 1 ou 2, dans lequel ledit moyen destiné à provoquer l'acquisition d'une image sélectionnée par l'utilisateur comprend :
un moyen, répondant à une première saisie de l'utilisateur, destiné à amener le dispositif d'affichage (118) à indiquer une partie d'une image à l'intérieur de ladite seconde zone en tant que dite image sélectionnée.

4. Système (1) selon l'une des revendications 1 à 3, dans lequel ledit moyen destiné à provoquer l'acquisition d'une image sélectionnée par l'utilisateur comprend :
un moyen, répondant à une seconde saisie de l'utilisateur, destiné à acquérir l'image à l'intérieur de ladite seconde zone, ou à l'intérieur de ladite partie indiquée de celle-ci, en tant que dite image sélectionnée.

5. Système (1) selon l'une des revendications 1 à 4, dans lequel le processeur (32) comprend :
un moyen destiné à provoquer la mémorisation de l'image sélectionnée acquise, et/ou à copier l'image sélectionnée mémorisée dans un document (10) à un emplacement désigné par l'utilisateur.

6. Système (1) selon la revendication 5, dans lequel le moyen destiné à provoquer la mémorisation de l'image sélectionnée acquise comprend :
un moyen destiné à mémoriser ladite image sélectionnée à un emplacement prédéterminé dans un dispositif de mémoire (34, 38) relié au moyen de traitement (32).

7. Système (1) selon la revendication 5 ou 6, dans lequel le moyen destiné à copier comprend :
un moyen, répondant à une troisième saisie de l'utilisateur, destiné à amener le dispositif d'affichage (118) à indiquer ledit emplacement désigné, qui est désigné par l'utilisateur.

8. Système (1) selon la revendication 7, dans lequel le moyen destiné à copier comprend :
un moyen, répondant à une quatrième saisie de l'utilisateur, destiné à copier ladite image sélectionnée dans le document (10) audit emplacement désigné.

9. Système (1) selon l'une des revendications 1 à 8, comprenant en outre :
un moyen destiné à amener le dispositif d'affichage (118) à afficher ledit document (10) à l'intérieur de la première zone sur la surface de travail (112), et
dans lequel le moyen destiné à copier comprend :
un moyen destiné à provoquer l'affichage de l'image sélectionnée audit emplacement désigné à l'intérieur du document affiché (10).

10. Procédé d'acquisition d'images dans un système de bureau interactif (1) comprenant une surface de travail (112), un dispositif d'affichage (118) destiné à afficher des images dans une première zone, un dispositif d'acquisition d'image (116) destiné à acquérir des images dans une seconde zone sur la surface de travail (112), et un processeur (32), relié au dispositif d'affichage (118) et au dispositif d'acquisition d'image (116), **caractérisé par** les étapes consistant à :
(a) provoquer en réponse à une saisie de l'utilisateur, l'acquisition d'une image sélectionnée par l'utilisateur, ladite image sélectionnée par l'utilisateur représentant des données d'un type particulier, et
(b) déterminer le type particulier d'après une pluralité de types prédéterminés à partir de ladite image sélectionnée par l'utilisateur.
